# EUROPÄISCHE PATENTSCHRIFT

(11) **EP 4 084 189 B1**
(45) Veröffentlichungstag und Bekanntmachung des Hinweises auf die Patenterteilung: **17.07.2024**
(21) Anmeldenummer: 22020037.2
(22) Anmeldetag: 08.02.2022
(51) Int. Cl.: H01M 10/613, H01M 10/625, H01M 10/6554, H01M 50/502

(54) **TRAKTIONSBATTERIE EINES KRAFTFAHRZEUGES**
TRACTION BATTERY OF A MOTOR VEHICLE
BATTERIE DE TRACTION D'UN VÉHICULE AUTOMOBILE

(30) Priorität: 29.04.2021 DE 102021111099
(43) Veröffentlichungstag der Anmeldung: 02.11.2022
(73) Patentinhaber: Dr. Ing. h.c. F. Porsche Aktiengesellschaft, 70435 Stuttgart (DE)
(72) Erfinder: Schiek, Werner, 71131 Jettingen (DE); Brodersen, Ronny, 74343 Sachsenheim (DE)

(56) Entgegenhaltungen:
- WO-A1-2018/105610
- WO-A1-2020/028931
- DE-A1- 102007 063 178

## Beschreibung

Die Erfindung betrifft eine Traktionsbatterie eines Kraftfahrzeugs.

Eine Traktionsbatterie eines als Elektrofahrzeug oder Hybridfahrzeug ausgebildeten Kraftfahrzeugs dient der Speicherung elektrischer Antriebsenergie für das Kraftfahrzeug. Eine solche Traktionsbatterie verfügt über mehrere Batteriemodule, wobei jedes Batteriemodul ein Modulgehäuse und vom Modulgehäuse aufgenommene Batteriezellen aufweist. Eine Traktionsbatterie kann ein Batteriegehäuse aufweisen, welches die Batteriemodule aufnimmt und gegenüber einer Umgebung abdichtet. Ist kein separates Batteriegehäuse vorhanden, dichten die Modulgehäuse der Batteriemodule die Batteriezellen für jedes Batteriemodul individuell gegenüber der Umgebung ab, wobei dann Strukturbauteile einer Karosserie des Kraftfahrzeugs strukturversteifende Funktionen eines Batteriegehäuses übernehmen.

Die Batteriezellen jedes Batteriemoduls einer Traktionsbatterie sind untereinander über elektrische Stromleiter gekoppelt, die als Busbar bezeichnet werden. Diese als Busbar bezeichneten elektrischen Stromleiter, die der elektrischen Kopplung der Batteriezellen eines jeweiligen Batteriemoduls dienen, erstrecken sich innerhalb des Modulgehäuses des jeweiligen Batteriemoduls.

Die Batteriemodule einer Traktionsbatterie sind über elektrische Stromschienen elektrisch gekoppelt. Die elektrischen Stromschienen erstrecken sich dabei außerhalb der Modulgehäuse der zu koppelnden Batteriemodule.

Die elektrischen Stromschienen, die der elektrischen Kopplung der Batteriemodule einer Traktionsbatterie dienen, übertragen hohe elektrische Ströme. Daher sind diese elektrischen Stromschienen auch einer hohen Erwärmung ausgesetzt. Bislang bereitet es Schwierigkeiten, die Wärme von den elektrischen Stromschienen, die der elektrischen Kopplung der Batteriemodule einer Traktionsbatterie dienen, effizient abzuführen.

Aus der DE 10 2019 -122 754 A1 ist ein Batteriemodul einer Traktionsbatterie eines Kraftfahrzeugs bekannt. Das Batteriemodul verfügt über mehrere Batteriezellen, die über eine Busbar elektrisch gekoppelt sind. Die Busbar besteht aus Kupfer und ist mit einem Kühlkörper thermisch leitend verbunden. So kann von der jeweiligen Busbar Wärme abgeführt werden.

Aus der US 2020/0136326 A1 ist eine elektrische Einheit mit einem elektrischen Kontakt und an den elektrischen Kontakt angeschlossenen Busbars bekannt. Die an den elektrischen Kontakt angeschlossenen Busbars sind mit einem Kühlkörper verbunden. Der Kühlkörper ist dabei zwischen den Busbars und dem elektrischen Kontakt positioniert.

Aus der DE 10 2007 063 178 A1 ist Traktionsbatterie eines Kraftfahrzeugs nach dem Oberbegriff des Anspruch 1 bekannt.

WO 2018 1105 610 A1 und WO 2020 / 028 931 A1 offenbaren weiteren Stand der Technik.

Aus dem Stand der Technik sind zwar Ausführungen bekannt, um Busbars, die der elektrischen Kopplung der Batteriezellen eines Batteriemoduls einer Traktionsbatterie dienen, zu kühlen, aus dem Stand der Technik sind jedoch keine Ausführungen bekannt, um die elektrischen Stromschienen einer Traktionsbatterie eines Kraftfahrzeugs, die der elektrischen Kopplung der Batteriemodule der Traktionsbatterie dienen, vor einer thermischen Überlastung effektiv zu schützen.

Aufgabe der Erfindung ist es, eine neuartige Traktionsbatterie eines Kraftfahrzeugs zu schaffen, bei welcher die elektrischen Stromschienen, die der elektrischen Kopplung der Batteriemodule der Traktionsbatterie dienen, vor einer thermischen Überlastung effektiv geschützt sind.

Diese Aufgabe wird durch eine Traktionsbatterie nach Patentanspruch 1 gelöst.

Zwischen den elektrischen Stromschienen, die der elektrischen Kopplung der Batteriemodule dienen, und einem angrenzenden Gehäuse der Traktionsbatterie oder einem angrenzenden Strukturbauteil einer Karosserie des Kraftfahrzeugs oder einem angrenzenden Modulgehäuse eines Batteriemoduls ist mindestens ein Wärmeleitkörper angeordnet.

Über diesen mindestens einen Wärmeleitkörper kann Wärme von der jeweiligen elektrischen Stromschiene an das jeweilige angrenzende Bauteil abgeleitet werden und so die elektrische Stromschiene vor einer zu starken thermischen Belastung geschützt werden.

Das angrenzende Gehäuse der Traktionsbatterie oder das angrenzende Strukturbauteil der Karosserie des Kraftfahrzeugs oder das angrenzende Modulgehäuse des Batteriemoduls ist vorzugsweise aktiv gekühlt, insbesondere flüssigkeitsgekühlt, und/oder mit einem aktiv gekühlten, insbesondere flüssigkeitsgekühlten Bauteil, gekoppelt. Hiermit kann die Wärme besonders vorteilhaft abgeführt werden.

Mindestens eine erste der elektrischen Stromschienen, die der elektrischen Kopplung der Batteriemodule der Traktionsbatterie dienen, weist einen Stromschienenkern aus einem elektrisch leitfähigen Werkstoff und ein den Stromschienenkern außen mit Abstand umgebendes Stromschienengehäuse aus einem elektrisch nicht leitfähigen Werkstoff auf. Zwischen dem Stromschienenkern und dem Stromschienengehäuse der jeweiligen ersten elektrischen Stromschiene ist ein erster Wärmeleitkörper angeordnet. Zwischen dem Stromschienengehäuse der jeweiligen ersten elektrischen Stromschiene und dem angrenzenden Gehäuse der Traktionsbatterie oder dem angrenzenden Strukturbauteil der Karosserie des Kraftfahrzeugs oder dem angrenzenden Modulgehäuse des jeweiligen Batteriemoduls ist ein zweiter Wärmeleitkörper angeordnet. Bei den ersten elektrischen Stromschienen handelt es sich insbesondere um solche Stromschienen einer Traktionsbatterie, die relativ kurz sind und der elektrischen Kopplung von insbesondere unmittelbar benachbarten Batteriemodulen der Traktionsbatterie dienen.

Alternativ oder zusätzlich weist mindestens eine zweite der elektrischen Stromschienen, die der elektrischen Kopplung der Batteriemodule der Traktionsbatterie dienen, einen Stromschienenkern aus einem elektrisch leitfähigen Werkstoff und einen den Stromschienenkern außen umgebenden Stromschienenmantel aus einem elektrisch nicht leitfähigen Werkstoff auf, der direkt am Stromschienenkern der jeweiligen zweiten elektrischen Stromschiene anliegt. Zwischen dem Stromschienenmantel der jeweiligen zweiten elektrischen Stromschiene und dem angrenzenden Gehäuse der Traktionsbatterie oder dem angrenzenden Strukturbauteil der Karosserie des Kraftfahrzeugs oder dem angrenzenden Modulgehäuse des jeweiligen Batteriemoduls ist ein dritter Wärmeleitkörper angeordnet. Bei den zweiten elektrischen Stromschienen handelt es sich insbesondere um Stromschienen, die relativ lang ausgebildet sind und insbesondere weiter beabstandete Batteriemodule der Traktionsbatterie miteinander elektrisch koppeln.

Vorzugsweise koppelt der jeweilige dritte Wärmeleitkörper die jeweilige zweite Stromschiene direkt an ein Deckelbauteil oder Bodenbauteil, zusätzlich über einen EMV-Träger indirekt an ein Rahmenbauteil, welches eine Seitenwand des Gehäuses der Traktionsbatterie oder das angrenzenden Strukturbauteil der Karosserie bildet. Hiermit kann über zwei Pfade Wärme von der jeweiligen zweiten Stromschiene abgeführt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einer Traktionsbatterie im Bereich von vier Batteriemodulen, die nebeneinander und übereinander angeordnet sind,
- Fig. 2: ein erstes Detail II der Fig. 1 im Bereich eines Batteriemoduls und einer Stromschiene, die der Kopplung des Batteriemoduls mit einem anderen Batteriemodul dient,
- Fig. 3: ein zweites Detail III der Fig. 1 im Bereich eines Batteriemoduls und einer Stromschiene, die der Kopplung des Batteriemoduls mit einem anderen Batteriemodul dient,
- Fig. 4: eine Abwandlung des Details III der Fig. 3,
- Fig. 5: einen weiteren Ausschnitt aus einer Traktionsbatterie im Bereich eines Batteriemoduls und im Bereich von Stromschienen, die der Kopplung des Batteriemoduls mit einem anderen Batteriemodul dienen.

Die Erfindung betrifft eine Traktionsbatterie eines Kraftfahrzeugs. Eine solche Traktionsbatterie eines Kraftfahrzeugs dient der Speicherung elektrischer Antriebsenergie für das Kraftfahrzeug. Eine Traktionsbatterie verfügt über mehrere Batteriemodule, wobei jedes Batteriemodul über mehrere Batteriezellen verfügt.

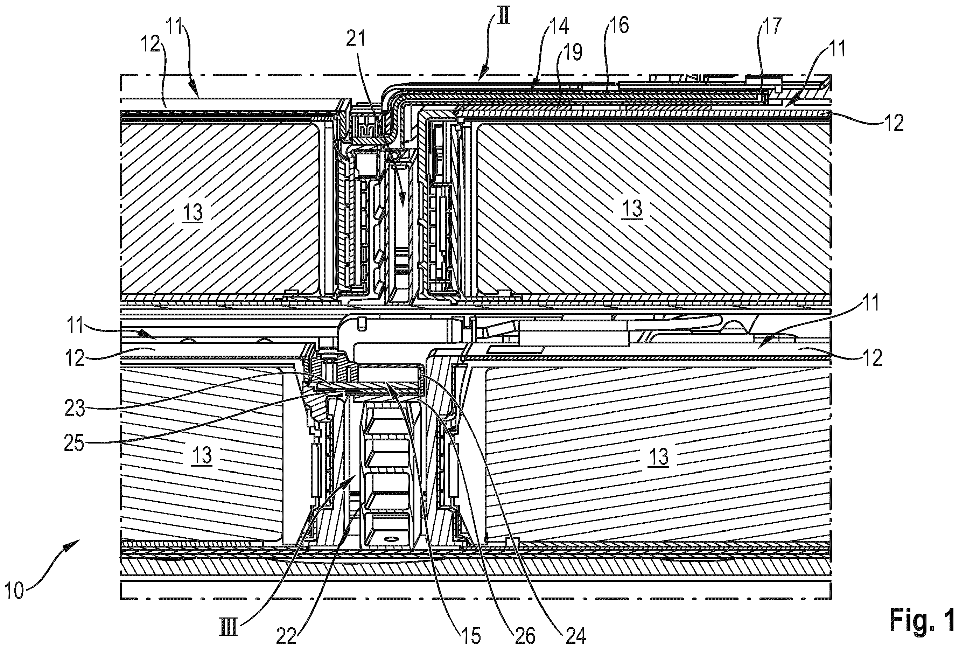

Fig. 1 zeigt einen Ausschnitt aus einer Traktionsbatterie 10 eines Kraftfahrzeugs im Bereich von vier Batteriemodulen 11, wobei in Fig. 1 die gezeigten Batteriemodule 11 einerseits nebeneinander und andererseits übereinander angeordnet sind. Jedes Batteriemodul 11 verfügt über ein Modulgehäuse 12 sowie über im Modulgehäuse 12 angeordnete Batteriezellen 13. Die Batteriezellen 13 eines jeden Batteriemoduls 11 sind über elektrische Stromleiter elektrisch gekoppelt. Diese elektrischen Stromleiter, die der elektrischen Kopplung der Batteriezellen 13 eines jeweiligen Batteriemoduls 11 dienen, werden auch als Busbar bezeichnet.

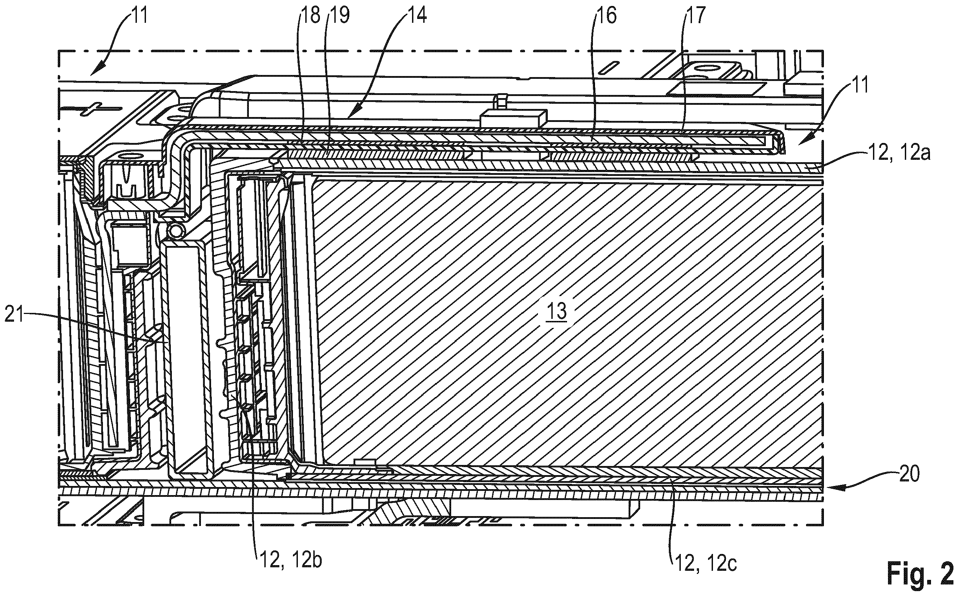

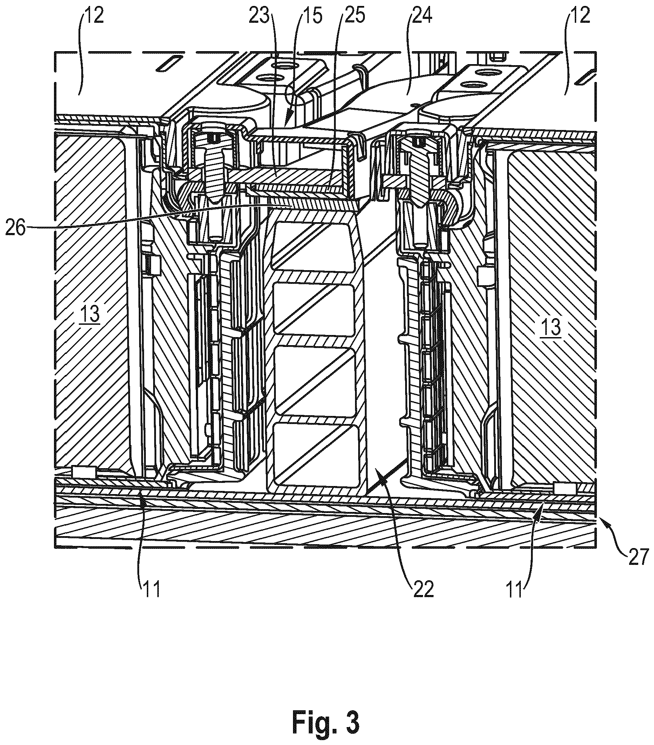

In einer Traktionsbatterie 10 sind auch die Batteriemodule 11 elektrisch gekoppelt, und zwar über Stromschienen, wobei die in Fig. 1 gezeigten Stromschienen 14, 15 in Fig. 2 bzw. in Fig. 3 in größerem Detail gezeigt sind.

Bei der Erfindung geht es darum, von den elektrischen Stromschienen, die der elektrischen Kopplung der Batteriemodule 11 dienen, Wärme effektiv abzuführen, um dieselben vor einer thermischen Überlastung zu schützen.

Zwischen einer jeweiligen elektrischen Stromschiene, die der elektrischen Kopplung der Batteriemodule 11 der Traktionsbatterie 10 dient, und einem angrenzenden Gehäuse der Traktionsbatterie 10 oder einem angrenzenden Strukturbauteil einer Karosserie des Kraftfahrzeugs oder einem angrenzenden Modulgehäuse 12 eines angrenzenden Batteriemoduls 11 ist mindestens ein Wärmeleitkörper angeordnet, wobei über diesen Wärmeleitkörper Wärme von der jeweiligen Stromschiene in Richtung auf das jeweilige angrenzende Bauteil abgeführt werden kann.

Dabei ist das jeweilige angrenzende Bauteil, also das angrenzende Gehäuse der Traktionsbatterie 10 oder das angrenzende Strukturbauteil der Karosserie des Kraftfahrzeugs oder das angrenzende Modulgehäuse 12, vorzugsweise aktiv gekühlt und/oder mit einem aktiv gekühlten Bauteil gekoppelt, wobei dann in diesem Fall die Wärme besonders effektiv abgeführt werden kann.

Bei einem aktiv gekühlten Bauteil handelt es sich insbesondere um ein flüssigkeitsgekühltes Bauteil, wie wassergekühltes Bauteil.

In Fig. 2 ist das Detail II der Fig. 1 im Bereich einer ersten elektrischen Stromschiene 14 gezeigt, die der elektrischen Kontaktierung des in Fig. 2 gezeigten Batteriemoduls 11 mit einem anderen Batteriemodul 11 dient, wobei diese beiden über die erste elektrische Stromschiene 14 elektrisch zu koppelnden Batteriemodule 11 in Fig. 1 in einer oberen Ebene unmittelbar nebeneinander angeordnet sind.

Die in Fig. 2 gezeigte elektrische Stromschiene 14, die der elektrischen Kopplung zweier Batteriemodule 11 dient, weist einen Stromschienenkern 16 aus einem elektrisch leitfähigen Werkstoff, wie zum Beispiel aus Kupfer, und ein den Stromschienenkern 16 außen mit Abstand umgebendes Stromschienengehäuse 17 aus einem elektrisch nicht leitfähigen Werkstoff, wie zum Beispiel aus Kunststoff, auf.

Zwischen dem Stromschienenkern 16 und dem Stromschienengehäuse 17 der in Fig. 2 gezeigten Stromschiene 14 ist ein erster Wärmeleitkörper 18 angeordnet, wobei dieser Wärmeleitkörper 18 den Stromschienenkern 16 mit dem Stromschienengehäuse 17 thermisch koppelt. Zusätzlich ist zwischen dem Stromschienengehäuse 17 und dem angrenzenden Modulgehäuse 12 des Batteriemoduls 11 ein zweiter Wärmeleitkörper 19 angeordnet, welcher die Stromschiene 14 an das Batteriemodulgehäuse 12 des Batteriemoduls 11 thermisch koppelt.

Dabei ist in Fig. 2 die gezeigte Stromschiene 14 mit einem Deckel 12a des Modulgehäuses 12 des Batteriemoduls 11 thermisch gekoppelt, wobei dieser Deckel 12a über Seitenwände 12b des Modulgehäuses 12 mit einer Bodenwand 12c des Modulgehäuses 12 thermisch gekoppelt ist, die mit einer aktiv gekühlten Baugruppe 20 thermisch gekoppelt ist. Bei dieser aktiv gekühlten Baugruppe 20 handelt es sich in Fig. 1, 2 um eine Baugruppe, die unterhalb des in Fig. 2 gezeigten Batteriemoduls 11 und oberhalb des unter diesem Batteriemodul 11 angeordneten Batteriemoduls 11 (siehe Fig. 1) angeordnet ist. Bei dieser Baugruppe 20 handelt es sich entweder um eine Baugruppe eines Batteriegehäuses oder um ein Strukturbauteil einer Karosserie des Kraftfahrzeugs.

Bei dem jeweiligen ersten Wärmeleitkörper 18, der zwischen dem jeweiligen Stromschienenkern 16 und dem jeweiligen Stromschienengehäuse 17 der elektrischen Stromschiene 14 angeordnet ist, handelt es sich um einen Vergussmassekörper aus einer Wärmeleitmasse, die in flüssigem Zustand in einem Hohlraum zwischen dem Stromschienenkern 16 und dem Stromschienengehäuse 17 angeordnet wird und dort aushärtet.

Bei dem jeweiligen zweiten Wärmeleitkörper 19, der zwischen dem jeweiligen Stromschienengehäuse 17 und dem angrenzenden Bauteil, in Fig. 2 zwischen dem Stromschienengehäuse 17 und dem Decke 12a des Modulgehäuses 12 angeordnet ist, handelt es sich vorzugsweise um ein Wärmeleitpad.

Fig. 1 und 2 zeigen zwischen den dort gezeigten Batteriemodulen 11 ein Rahmenbauteil 21, wobei es sich bei diesem Rahmenbauteil 21 um eine Seitenwand eines Gehäuses der Traktionsbatterie oder um ein Strukturbauteil der Karosserie des Kraftfahrzeugs handeln kann.

Fig. 1 zeigt auch zwischen den Batteriemodulen 11 der unteren Lage aus Batteriemodulen 11 ein Rahmenbauteil 22, bei welchem es sich entweder um eine Seitenwand des Gehäuses der Traktionsbatterie oder um ein angrenzendes Strukturbauteil der Karosserie des Kraftfahrzeugs handelt.

Fig. 3 zeigt das Detail III der Fig. 1 aus der Traktionsbatterie 10 im Bereich der Batteriemodule 11 der in Fig. 1 gezeigten unteren Lage aus Batteriemodulen 11, und zwar im Bereich einer Stromschiene 15, die der elektrischen Kopplung der in Fig. 3 gezeigten Batteriemodule 11 dient.

Auch diese Stromschiene 15 verfügt über einen Stromschienenkern 23 aus einem elektrisch leitfähigen Werkstoff, wie zum Beispiel aus Kupfer, und ein den Stromschienenkern 23 außen mit Abstand umgebendes Stromschienengehäuse 24 aus einem nicht elektrisch leitenden Werkstoff, wie zum Beispiel aus Kunststoff.

Das Stromschienengehäuse 24 umgibt den Stromschienenkern 23 außen, wobei in Fig. 3 in Übereinstimmung zur Fig. 2 einerseits zwischen dem Stromschienenkern 23 und dem Stromschienengehäuse 24 ein erster Wärmeleitkörper 25 und andererseits zwischen dem Stromschienengehäuse 24 und dem angrenzenden Rahmenbauteil 22 ein zweiter Wärmeleitkörper 26 angeordnet ist.

Bei dem ersten Wärmeleitkörper 25 handelt es sich vorzugsweise wiederum um einen Vergussmassekörper und bei dem zweiten Wärmeleitkörper 26 vorzugsweise wiederum um ein Wärmeleitpad.

Auf diese Art und Weise ist der Stromschienenkern 23 der in Fig. 3 gezeigten Stromschiene 15 thermisch über das Stromschienengehäuse 24 mit dem Rahmenbauteil 22 gekoppelt, wobei das Rahmenbauteil 22 thermisch mit der aktiv gekühlten Baugruppe 27 gekoppelt ist, die sich unterhalb des Rahmenbauteils 22 und unterhalb der Batteriemodule 11 erstreckt.

Bei diesem aktiv gekühlten Bauteil 27 handelt es sich um ein Bodenbauteil, entweder des Gehäuses der Traktionsbatterie oder der Karosserie des Kraftfahrzeugs.

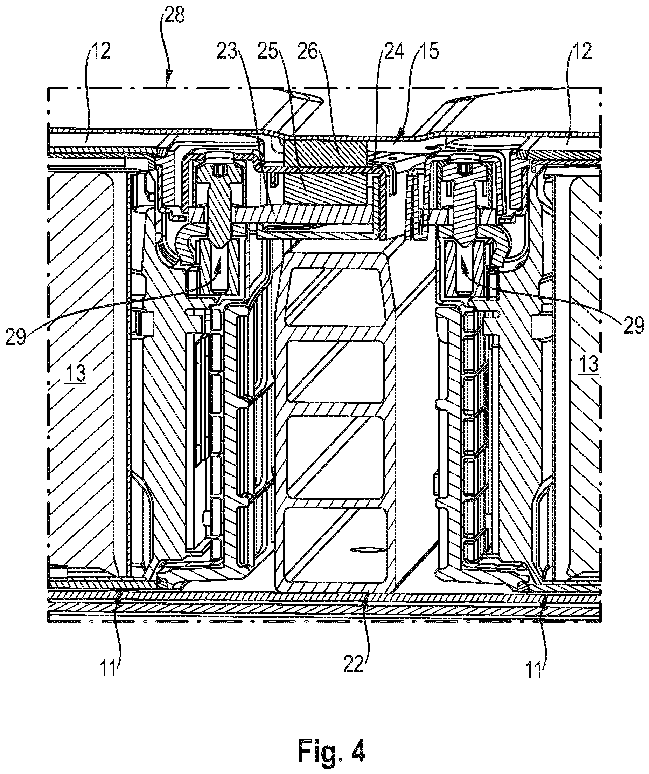

Fig. 4 zeigt eine Abwandlung des Details III der Fig. 3 im Bereich der Stromschiene 15, wobei in Fig. 4 die Stromschiene 15 nicht an das Rahmenbauteil 22 thermisch gekoppelt ist, sondern vielmehr an ein Deckelbauteil 28. Demnach ist in Fig. 4 der erste Wärmeleitkörper 25 wiederum zwischen dem Stromschienenkern 23 und dem Stromschienengehäuse 24 angeordnet, der zweite Wärmeleitkörper 26 ist zwischen dem Stromschienengehäuse 24 und dem Deckelbauteil 28 angeordnet.

In Fig. 3 und 4 ist die Kontaktierung des Stromschienenkerns 23 mit elektrischen Anschlüssen 29 der Batteriemodule 11 gut erkennbar. Die in Fig. 3 und 4 gezeigte Stromschiene 15 dient demnach der elektrischen Kontaktierung der beiden in Fig. 3 und 4 gezeigten, nebeneinander positionierten Batteriemodule 11.

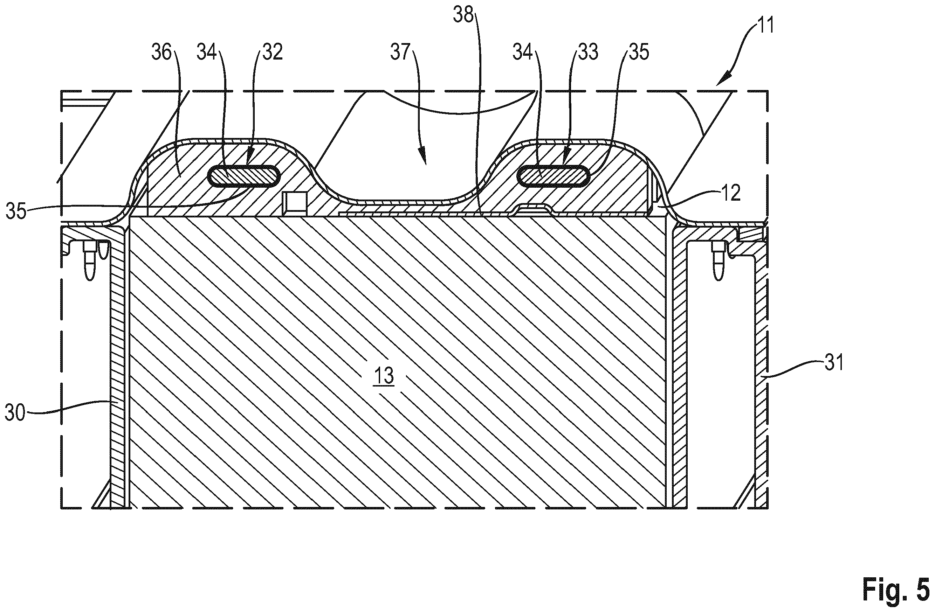

Fig. 5 zeigt ein weiteres Detail aus einer erfindungsgemäßen Traktionsbatterie 10 im Bereich eines Batteriemoduls 11, wobei dieses Batteriemodul 11 zwischen zwei Rahmenbauteilen 30, 31 angeordnet ist. Bei diesen Rahmenbauteilen 30, 31 kann es sich wiederum entweder um eine Seitenwand eines Battriegehäuses der Traktionsbatterie oder um Strukturbauteile einer Karosserie des Kraftfahrzeugs handeln. Oberhalb des Batteriemoduls 11 erstrecken sich zwei Stromschienen 32, 33, wobei jede dieser Stromschienen 32, 33 der elektrischen Kontaktierung von Batteriemodulen 11 der Traktionsbatterie 10 dient.

Jede dieser Stromschienen 32, 33 verfügt über einen Stromschienenkern 34 aus einem elektrisch leitfähigen Werkstoff, wie zum Beispiel aus Kupfer, und über einen den jeweiligen Stromschienenkern 34 außen umgebenden Stromschienenmantel 35 aus einem elektrisch nicht leitfähigen Werkstoff, wie zum Beispiel aus Kunststoff oder Gummi. Bei den elektrischen Stromschienen 32, 33 der Fig. 5 liegt der jeweilige Stromschienenmantel 35 direkt bzw. unmittelbar am jeweiligen Stromschienenkern 34 an, ohne dass zwischen denselben ein Hohlraum ausgebildet ist. Zwischen dem Stromschienenmantel 35 der jeweiligen Stromschiene 32, 33 und einem angrenzenden Bauteil ist ein Wärmeleitkörper 36 angeordnet. Bei diesem Wärmeleitkörper 36 handelt es sich vorzugsweise um einen Vergussmassekörper.

In Fig. 5 koppelt der Vergussmassekörper 36 die jeweilige Stromschiene 32, 33 thermisch einerseits direkt an ein Deckelbauteil 37 und andererseits indirekt über einen EMV-Träger 38 insbesondere an das Rahmenbauteil 31, bei welchem es sich um eine Seitenwand des Gehäuses der Traktionsbatterie oder um ein angrenzendes Strukturbauteil der Karosserie des Kraftfahrzeugs handelt. Das Deckelbauteil 37 und/oder das Rahmenbauteil 31 sind thermisch mit einem aktiv gekühlten Bauteil gekoppelt, insbesondere mit einem flüssigkeitsgekühlten Bauteil, wie dies bereits im Zusammenhang mit den Details der Fig. 2, 3 und 4 beschrieben wurde.

Mit der Erfindung kann von Stromschienen 14, 15, 32, 33 einer Traktionsbatterie 10 eines Kraftfahrzeugs effektiv Wärme abgeführt werden, um eine unzulässig hohe thermische Belastung der Stromschienen 14, 15, 32, 33 zu vermeiden. Über die Stromschienen 14, 15, 32, 33 kann ein höherer elektrischer Strom fließen, ohne die Gefahr einer thermischen Überbelastung. So kann ein Elektrofahrzeug oder Hybridfahrzeug effektiver betrieben werden, insbesondere beim Laden der Traktionsbatterie. Beim Laden kann länger mit höherer Ladeleistung gearbeitet werden. Dies kann selbstverständlich auch beim Entladen erfolgen.

## Patentansprüche

1. Traktionsbatterie (10) eines Kraftfahrzeugs,
mit mehreren Batteriemodulen (11),
wobei die Batteriemodule (11) der Traktionsbatterie (12) über elektrische Stromschienen (14, 15, 32, 33) elektrisch gekoppelt sind,
wobei jedes Batteriemodul (11) ein Modulgehäuse (12) und im jeweiligen Modulgehäuse (12) aufgenommene Batteriezellen (13) aufweist,
wobei die Batteriezellen (13) jedes Batteriemoduls 12) elektrisch gekoppelt sind,
wobei zwischen den elektrischen Stromschienen (14, 15, 32, 33), die der elektrischen Kopplung der Batteriemodule (11) dienen, und einem angrenzenden Gehäuse der Traktionsbatterie oder einem angrenzenden Strukturbauteil einer Karosserie des Kraftfahrzeugs oder einem angrenzenden Modulgehäuse (12) eines Batteriemoduls (11) mindestens ein Wärmeleitkörper (18, 19, 25, 26, 36) angeordnet ist, **dadurch gekennzeichnet, dass**
mindestens eine erste der elektrischen Stromschienen (14, 15), die der elektrischen Kopplung der Batteriemodule (11) dienen, einen Stromschienenkern (16, 23) aus einem elektrisch leitfähigen Werkstoff und ein den Stromschienenkern (16, 23) außen umgebendes Stromschienengehäuse (17, 24) aus einem elektrisch nicht leitfähigen Werkstoff aufweist, wobei zwischen dem Stromschienenkern (16, 23) und dem Stromschienengehäuse (17, 24) der jeweiligen ersten elektrischen Stromschiene (14, 15) ein erster Wärmeleitkörper (18, 25) angeordnet ist, und wobei zwischen dem Stromschienengehäuse (17, 24) der jeweiligen ersten elektrischen Stromschiene (14, 15) und dem angrenzenden Gehäuse der Traktionsbatterie oder dem angrenzenden Strukturbauteil der Karosserie des Kraftfahrzeugs oder dem angrenzenden Modulgehäuse (12) des jeweiligen Batteriemoduls (11) ein zweiter Wärmeleitkörper (19, 26) angeordnet ist, und/oder
mindestens eine zweite der elektrischen Stromschienen (32, 33), die der elektrischen Kopplung der Batteriemodule (11) dienen, einen Stromschienenkern (34) aus einem elektrisch leitfähigen Werkstoff und einen den Stromschienenkern (34) außen umgebenden Stromschienenmantel (35) aus einem elektrisch nicht leitfähigen Werkstoff aufweist, der direkt am Stromschienenkern (34) der jeweiligen zweiten elektrischen Stromschiene (32, 33) anliegt, wobei zwischen dem Stromschienenmantel (34) der jeweiligen elektrischen Stromschiene (32, 33) und dem angrenzenden Gehäuse der Traktionsbatterie oder dem angrenzenden Strukturbauteil der Karosserie des Kraftfahrzeugs oder dem angrenzenden Modulgehäuse (12) des jeweiligen Batteriemoduls (11) ein dritter Wärmeleitkörper (36) angeordnet ist.

2. Traktionsbatterie nach Anspruch 1, **dadurch gekennzeichnet, dass** der jeweilige erste Wärmeleitkörper (18, 25) ein Vergussmassekörper ist.

3. Traktionsbatterie nach Anspruch 1 oder 2, **dadurch gekennzeichnet, dass** der jeweilige zweite Wärmeleitkörper (19, 26) ein Wärmeleitpad ist.

4. Traktionsbatterie nach einem der Ansprüche 1 bis 3, **dadurch gekennzeichnet, dass** der jeweilige dritte Wärmeleitkörper (36) ein Vergussmassekörper ist.

5. Traktionsbatterie nach einem der Ansprüche 1 bis 4, **dadurch gekennzeichnet, dass** der jeweilige dritte Wärmeleitkörper (36) die jeweilige zweite Stromschiene (32, 33) direkt an ein Deckelbauteil (37) oder Bodenbauteil koppelt.

6. Traktionsbatterie nach einem der Ansprüche 1 bis 5, **dadurch gekennzeichnet, dass** der jeweilige dritte Wärmeleitkörper (36) die jeweilige zweite Stromschiene (32, 33) über einem EMV-Träger (38) indirekt an ein Rahmenbauteil (31) koppelt, welches eine Seitenwand des Gehäuses der Traktionsbatterie oder das angrenzenden Strukturbauteil der Karosserie bildet.

7. Traktionsbatterie nach einem der vorhergehenden Ansprüche, **dadurch gekennzeichnet, dass** das angrenzende Gehäuse der Traktionsbatterie oder das angrenzende Strukturbauteil der Karosserie des Kraftfahrzeugs oder das angrenzende Modulgehäuse (12) des Batteriemoduls (11) aktiv gekühlt ist und/oder mit einem aktiv gekühlten Bauteil gekoppelt ist.

8. Traktionsbatterie nach einem der vorhergehenden Ansprüche, **dadurch gekennzeichnet, dass** das angrenzende Gehäuse der Traktionsbatterie oder das angrenzende Strukturbauteil der Karosserie des Kraftfahrzeugs oder das angrenzende Modulgehäuse (12) des Batteriemoduls (11) flüssigkeitsgekühlt ist und/oder mit einem flüssigkeitsgekühlten Bauteil gekoppelt ist.

## Claims

1. Traction battery (10) of a motor vehicle, having a plurality, of battery modules (11), wherein the battery modules (11) of the traction battery (12) are electrically coupled via electrical busbars (14, 15, 32, 33),
wherein each battery module (11) has a module housing (12) and battery cells (13) accommodated in the respective module housing (12),
wherein the battery cells (13) of each battery module (12) are electrically coupled,
wherein at least one heat conducting body (18, 19, 25, 26, 36) is arranged between the electrical busbars (14, 15, 32, 33), which serve for the electrical coupling of the battery modules (11), and an adjacent housing of the traction battery or an adjacent structural component of a body of the motor vehicle or an adjacent module housing (12) of a battery module (11), **characterised in that**
at least a first one of the electrical busbars (14, 15), which serve for the electrical coupling of the battery modules (11), has a busbar core (16, 23) made of an electrically conductive material and a busbar housing (17, 24) made of an electrically non-conductive material surrounding the busbar core (16, 23) on the outside, wherein a first heat conducting body (18, 25) is arranged between the busbar core (16, 23) and the busbar housing (17, 24) of the respective first electrical busbar (14, 15), a first heat conducting body (18, 25) being arranged, and wherein a second heat conducting body (19, 26) is arranged between the busbar core (16, 23) and the busbar housing (17, 24) of the respective first electrical busbar (14, 15) and the adjacent housing of the traction battery or the adjacent structural component of the body of the motor vehicle or the adjacent module housing (12) of the respective battery module (11), and/or
at least a second one of the electrical busbars- (32, 33), which serve for the electrical coupling of the battery modules (11), has a busbar core (34) made of an electrically conductive material and a busbar sheath (35), which surrounds the busbar core (34) on the outside and is made of an electrically non-conductive material and which bears directly against the busbar core (34) of the respective second electrical busbar (32, .33), wherein a third heat conducting body (36) is arranged between the busbar sheath (34) of the respective electrical busbar (32, 33) and the adjacent housing of the traction battery or the adjacent structural component of the body of the motor vehicle or the adjacent module housing (12) of the respective battery module (11) .

2. Traction battery according to claim 1, **characterised in that** the respective first heat conducting body (18, 25) is a potting compound body.

3. Traction battery according to claim 1 or 2, **characterised in that** the respective second heat conducting body (19, 26) is a heat conducting pad.

4. Traction battery according to one of claims 1 through 3, **characterised in that** the respective third heat conducting body (36) is a potting compound body.

5. Traction battery according to one of claims 1 through 4, **characterised in that** the respective third heat conducting body (36) couples the respective second busbar (32, 33) directly to a cover component (37) or base component.

6. Traction battery according to one of claims 1 through 5, **characterised in that** the respective third heat conducting body (36) indirectly couples the respective second busbar (32, 33) via an EMC carrier (38) to a frame component (31), which forms a side wall of the housing of the traction battery or the adjacent structural component of the body.

7. Traction battery according to one of the preceding claims, **characterised in that** the adjacent housing of the traction battery or the adjacent- structural component of the body of the motor vehicle or the adjacent module housing (12) of the battery module (11) is actively cooled and/or is coupled to an actively cooled component.

8. Traction battery according to one of the preceding claims, **characterised,in that** the adjacent housing of the traction battery or the adjacent structural component of the body of the motor vehicle or the adjacent module housing (12) of the battery module (11) is liquid-cooled and/or is coupled to a liquid-cooled component.

## Revendications

1. Batterie de traction (10) d'un véhicule automobile,
ayant une pluralité de modules batteries (11),
dans laquelle les modules batteries (11) de la batterie de traction (12) sont couplés électriquement par l'intermédiaire de barres omnibus électriques (14, 15, 32, 33),
dans laquelle chaque module batterie (11) a un logement de module (12) et des cellules de batterie (13) reçues dans le logement de module (12) respectif,
dans laquelle les cellules de batterie (13) de chaque module batterie (12) sont couplées électriquement,
dans laquelle au moins un corps conducteur de chaleur (18, 19, 25, 26, 36) est disposé entre les barres omnibus électriques (14, 15, 32, 33), qui servent au couplage électrique des modules batteries (11), et un logement adjacent de la batterie de traction ou un composant structurel adjacent d'une carrosserie du véhicule automobile ou un logement de module adjacent (12) d'un module batterie (11), **caractérisée en ce que**
au moins une première parmi les barres omnibus électriques (14, 15), qui servent au couplage électrique des modules batteries (11), a un noyau de barre omnibus (16, 23) constitué d'un matériau électroconducteur et un logement de barre omnibus (17, 24) constitué d'un matériau non électroconducteur entourant le noyau de barre omnibus (16, 23) sur l'extérieur, dans laquelle un premier corps conducteur de chaleur (18, 25) est disposé entre le noyau de barre omnibus (16, 23) et le logement de barre conductrice (17, 24) de la première barre omnibus électrique (14, 15) respective, un premier corps conducteur de chaleur (18, 25) étant disposé, et dans laquelle un deuxième corps conducteur de chaleur (19, 26) est disposé entre le noyau de barre omnibus (16, 23) et le logement de barre omnibus (17, 24) de la première barre omnibus électrique (14, 15) respective et le logement adjacent de la batterie de traction ou le composant structurel adjacent de la carrosserie du véhicule automobile ou le logement de module adjacent (12) du module batterie (11) respectif, et/ou
au moins une deuxième parmi les barres omnibus électriques (32, 33), qui servent au couplage électrique des modules batteries (11), a un noyau de barre omnibus (34) constitué d'un matériau électroconducteur et une gaine de barre omnibus (35), qui entoure le noyau de barre omnibus (34) sur l'extérieur et est constitué d'un matériau non électroconducteur et qui s'appuie directement contre le noyau de barre omnibus (34) de la deuxième barre omnibus électrique (32, 33) respective, dans laquelle un troisième corps conducteur de chaleur (36) est disposé entre la gaine de barre omnibus (34) de la barre omnibus électrique (32, 33) respective et le logement adjacent de la batterie de traction ou le composant structurel adjacent de la carrosserie du véhicule automobile ou le logement de module (12) adjacent du module batterie (11) respectif.

2. Batterie de traction selon la revendication 1, **caractérisée en ce que** le premier corps conducteur de chaleur (18, 25) respectif est un corps de matériau d'enrobage.

3. Batterie de traction selon la revendication 1 ou 2, **caractérisée en ce que** le deuxième corps conducteur de chaleur (19, 26) respectif est un plot conducteur de chaleur.

4. Batterie de traction selon l'une des revendications 1 à 3, **caractérisée en ce que** le troisième corps conducteur de chaleur (36) respectif est un corps de matériau d'enrobage.

5. Batterie de traction selon l'une des revendications 1 à 4, **caractérisée en ce que** le troisième corps conducteur de chaleur (36) respectif couple directement la deuxième barre omnibus (32, 33) respective à un composant de capot (37) ou à un composant de base.

6. Batterie de traction selon l'une des revendications 1 à 5, **caractérisée en ce que** le troisième corps conducteur de chaleur (36) couple indirectement la deuxième barre conductrice (32, 33) respective par l'intermédiaire d'un support CEM (38) à un composant de cadre (31) qui forme une paroi latérale du logement de la batterie de traction ou du composant structurel adjacent du corps.

7. Batterie de traction selon l'une des revendications précédentes, **caractérisée en ce que** le logement adjacent de la batterie de traction ou le composant structurel adjacent de la carrosserie du véhicule automobile ou le logement de module (12) adjacent du module batterie (11) est refroidi activement et/ou est couplé à un composant refroidi activement.

8. Batterie de traction selon l'une des revendications précédentes, **caractérisée en ce que** le logement adjacent de la batterie de traction ou le composant structurel adjacent de la carrosserie du véhicule automobile ou le logement de module (12) adjacent du module batterie (11) est refroidi par un liquide et/ou est couplé à un composant refroidi par un liquide.
